## Europäisches Patentamt

## European Patent Office

## Office européen des brevets

(11) Veröffentlichungsnummer: **0 161 506 B1**

(12) # EUROPÄISCHE PATENTSCHRIFT

(45) Veröffentlichungstag der Patentschrift: **09.12.87**

(51) Int. Cl.⁴: **B 23 B 27/16**

(21) Anmeldenummer: **85104508.8**

(22) Anmeldetag: **13.04.85**

(54) Klemmhalter.

(30) Priorität: **17.04.84 DE 3414436**

(43) Veröffentlichungstag der Anmeldung:
**21.11.85 Patentblatt 85/47**

(45) Bekanntmachung des Hinweises auf die Patenterteilung:
**09.12.87 Patentblatt 87/50**

(84) Benannte Vertragsstaaten:
**AT BE CH DE FR GB IT LI LU NL SE**

(56) Entgegenhaltungen:
**EP - B - 0 054 291
FR - A - 2 139 951
GB - A - 1 075 964
US - A - 3 320 654
US - A - 3 491 421
US - A - 3 925 868
US - A - 4 337 562**

(73) Patentinhaber: **Feldmühle Aktiengesellschaft,
Fritz-Vomfelde-Platz 4, D-4000 Düsseldorf 11 (DE)**

(72) Erfinder: **Kraft, Harald, Dipl.-Ing., Aspachstrasse 9,
D-7336 Uhingen 1 (DE)**
Erfinder: **Eder, Otto, Hermann-Hesse-Weg 7,
D-7316 Köngen (DE)**

## Beschreibung

Die Erfindung betrifft einen Klemmhalter mit eingesetzter Schneidplatte aus einem spröden, gesinterten Hartstoff, die eine Befestigungsbohrung aufweist, wobei der Klemmhalter mit einer Ausnehmung zur Aufnahme der Schneidplatte und gegebenenfalls einer Stützplatte versehen ist und ein die Stützplatte durchgreifendes Element mit seinem Kopf in die Befestigungsbohrung eingreift.

Die Erfindung geht aus von einem Stand der Technik, wie er durch die US-PS 33 14 126 gegeben ist. Bei einem Klemmstahlhalter dieser Art wird durch eine Ringnut in der Spannschraube ein Kniehebel als Spannelement beaufschlagt, der im Stahlhalter gelagert ist und dessen Spannarm durch die Ausnehmung des Stahlhalters hindurch in die Befestigungsbohrung der Schneidplatte eingreift. Durch Anziehen der Spannschraube wird der Druckarm nach unten bewegt, so dass sich der Kopf des Spannarmes an die Wandung der Bohrung der Schneidplatte anlegt und diese damit in der vorgesehenen Position in der Ausnehmung des Stahlhalters festliegt. Die aus Karbidmaterialien, also Hartmetall, bestehende Schneidplatte wird von der Bohrung her durch den Kniehebel punktförmig belastet, wobei recht hohe Kräfte übertragen werden müssen, um einen einwandfreien Sitz der Schneidplatte zu gewährleisten. Da Hartmetalle relativ zähe Werkstoffe sind, führt diese Punkbelastung zu keinen Schäden an der Schneidplatte.

Sinterkeramische Werkstoffe weisen gegenüber Hartmetall jedoch ganz andere Eingenschaften auf. So haben sie neben vielen positiven Werten, wie beispielsweise grösserer Wärmebeständigkeit, eine wesentlich höhere Sprödigkeit als Hartmetall, d. h., dass diese punktförmige Belastung insbesondere bei zusätzlicher schwerer Belastung des Stahlhalters durch den Schneidvorgang zur Rissbildung und damit auch zum Bruch der Schneidplatte führen kann.

Durch die DE-PS 21 02 479 ist ein ähnlicher Klemmhalter bekannt geworden. Bei diesem weist die Schneidplatte eine schräg verlaufende Bohrung auf und ein Spannhebel greift an dem dadurch gebildeten spitzen Winkel zwischen Unterfläche und Bohrung an. Es kommt dabei zu einer linienförmigen Berührung zwischen dem zylindrischen Spannarm und der Bohrungswandung. Durch das Anziehen der Spannschraube wird insbesondere der untere Bereich der Berührungslinie beaufschlagt. Es wird also ein ungleichmässig verteilter Druck in der Bohrung auf die Schneidplatte ausgeübt, so dass auch hier nur Schneidplatten mit einer hohen Zähigkeit diese Beanspruchung überstehen können.

Ähnliche Klemmhalterkonstuktionen werden in den DE-OS 15 02 032, 18 09 775 und 25 14 882 beschrieben. Alle diese Vorschläge weisen den gemeinsamen Nachteil auf, dass sie die Schneidplatte von der Bohrung her punkt- oder linienförmig belasten und damit einen extrem hohen Punkt- oder Liniendruck in die Schneidplatte einbringen, der beim Einsatz von keramischen Schneidplatten, insbesondere oxidkeramischen Schneidplatten, zum Bruch der Schneidplatte führt.

Keramische Schneidplatten wurden deshalb meist ohne Befestigungsbohrung mit Klemmhaltern verwendet, die eine mechanische Klemmung mittels Reibschluss aufweisen. Man geht bisher davon aus, dass beim Einbringen eines Spannelementes in die Bohrung der Schneidplatte diese durch punkt-oder linienförmige Belastung so beansprucht wird, dass sie bereits beim Spannen bzw. Eintritt in das Werkstück bricht.

Aufgabe der vorliegenden Erfindung ist daher, eine Möglichkeit aufzuzeigen, keramische Schneidplatten mit Befestigungsbohrungen in Klemmstahlhaltern einzusetzen, bei denen die Klemmung mittels eines in die Befestigungsbohrung eingreifenden Spannelementes erfolgt.

Diese Aufgabe wird gelöst durch einen Klemmhalter mit eingesetzter Schneidplatte aus einem spröden, gesinterten Hartstoff, die eine Befestigungsbohrung aufweist, wobei der Klemmhalter mit einer Ausnehmung zur Aufnahme der Schneidplatte und gegebenenfalls einer Stützplatte versehen ist, wobei ein die Stützplatte durchgreifendes Spannelement mit seinem Kopf in die Befestigungsbohrung eingreift, mit dem kennzeichnenden Merkmal, dass der Kopf des Spannelementes mit einem verformbaren Material beschichtet ist.

Drückt beim Einspannen der Schneidplatte der Kopf des Spannelementes auf eine Wandung der Befestigungsbohrung, so führt dieser Druck zu einer Verformung des Materials der Beschichtung, d. h., dass bei einem zylindrischen Kopf, wie er gemäss einer vorteilhaften Ausgestaltung der Erfindung eingesetzt wird, die ursprüngliche Linienpressung in eine Flächenpressung überführt wird, dadurch verringert sich die spezifische Pressung in der Befestigungsbohrung, es findet also eine Verteilung der Anpresskraft statt, d. h., dass ein Bruch der Schneidplatte mit Sicherheit verhindert wird.

Eine bevorzugte Ausgestaltung der Erfindung sieht vor, dass die Dicke der Materialschicht 0,4 bis 1,0 mm beträgt. Die Obergrenze ist dabei durch drei Parameter gesetzt. Zum einen kann man die Befestigungsbohrung in der Schneidplatte nicht beliebig vergrössern, ohne die Schneidwerte zu sehr zu schwächen, zum anderen ist es unwirtschaftlich, eine zu grosse Beschichtungsstärke aufzubringen. Ausserdem muss der Kern des Kopfes des Spannelementes noch über die genügende Festigkeit verfügen, um den Spanndruck aufbringen zu können. Die untere Grenze der Dicke der Materialschicht sorgt dafür, dass sich der Kopf des Spannelementes beim Klemmvorgang nicht durch das Beschichtungsmaterial hindurchdrücken kann.

Als Materialien für die Beschichtung werden gemäss einer bevorzugten Ausgestaltung der Erfindung weiche Metalle eingesetzt. Unter dem Begriff weiche Metalle sollen im wesentlichen Aluminium, Kupfer und Zinn sowie deren Legierungen verstanden werden. Ausgenommen von dieser Aufzählung ist lediglich Blei, weil Blei im allgemeinen zu weich ist, d. h., dass sich nach kurzem Spannvorgang bereits der Kopf des Spannelementes durchdrückt, so dass mit Sicherheit ein wiederholtes Spannen unmöglich ist.

Das Aufbringen der Materialschicht geschieht zweckmässig durch Auflöten, insbesondere, wenn es sich um Zinn oder auch um Kupfer handelt.

Beim Aufbringen von Aluminium bedient man sich zweckmässigerweise des Flammspritzverfahrens, womit aber auch die beiden anderen Metalle aufgebracht werden können.

Der Kopf des Spannelements ist gemäss einer besonders bevorzugten Ausgestaltung der Erfindung kugelförmig ausgeführt. Der kugelförmige Kopf gestattet eine saubere Anlage in der Schneidplatte, ohne dass ein bestimmter Anlagepunkt vorgeschrieben ist, d. h., dass fertigungsbedingte Toleranzen ausgeglichen werden. Aufgrund der Balligkeit kommt es dabei zu einer punktförmigen Berührung. Da die Beschichtung jedoch verformbar ist, ändert sich diese punktförmige Berührung, d. h. ein Teil der Kugelfläche wird zylindrisch verformt, wobei die Grösse dieser Fläche vom aufgebrachten Druck abhängig ist. Gleichzeitig wird dabei für eine satte Anlage in der Befestigungsbohrung der Schneidplatte gesorgt, die Kraft auf eine grössere Fläche verteilt, wodurch der Einsatz von Sinterkeramik überhaupt erst möglich wird.

Die Erfindung wird nachstehend anhand von in den Zeichnungen dargestellten Ausführungsbeispielen erläutert:

Figur 1 zeigt einen Klemmstahlhalter in perspektivischer Darstellung nach dem Stand der Technik,

Figur 2 einen Schnitt durch einen Klemmhalter mit einem als Kniehebel ausgebildeten Spannelement.

Figur 3 einen Klemmhalter, bei dem das Spannelement als keilbetätigter Schieber ausgebildet ist und

Figur 4 einen Klemmhalter mit einer Spannschraube, die einen konischen Kopf zur Klemmung aufweist.

Der Klemmhalter 7 weist eine Ausnehmung 8 auf, die zur Aufnahme der Stützplatte 9 und der Schneidplatte 1 dient. Die Stützplatte 9 wird durch eine Federbuchse 13, die die Stützplatte 9 durchgreift und in dem Bohrloch 17 des Klemmhalters 7 verankert ist, mit diesem verbunden. Die Federbuchse 13 weist einen Kragen 18 auf, der in die Aussenkung 16 der Stützplatte 9 eingreift, wodurch diese auf dem Boden 19 der Ausnehmung 8 gehalten wird.

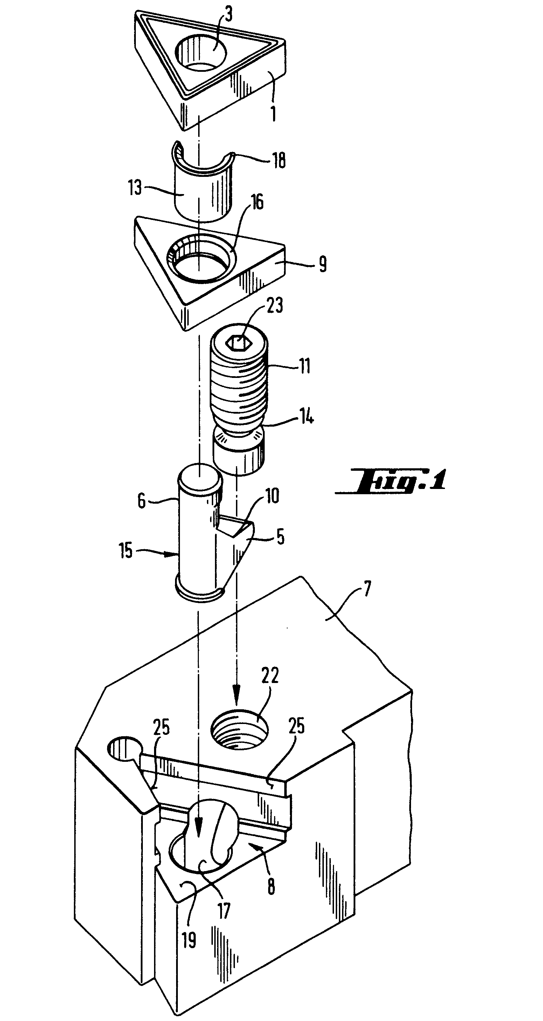

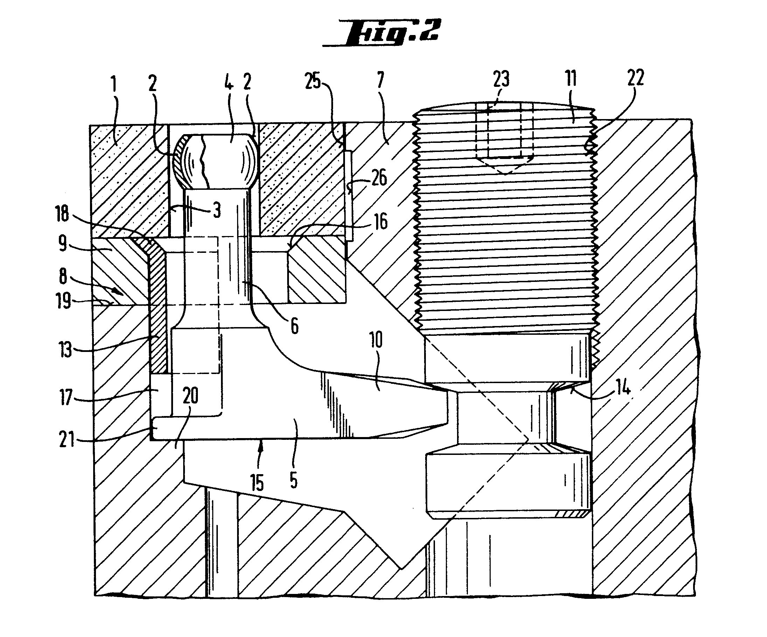

Das Spannelement 15 ist in den Figuren 1 und 2 als Kniehebel 5 dargestellt, der aus dem Spannarm 6 mit daran befindlichem Kopf 4 und dem Druckarm 10 mit dem Kippansatz 21 besteht. Der Kippansatz 21 ruht auf dem Kipplager 20 im Klemmhalter 7. Der freie Schenkel des Druckarmes 10 reicht in die Gewindebohrung 22 hinein und befindet sich hier im Bereich der Ringnut 14 der Spannschraube 11. Die Spannschraube 11 ist mit einem Innensechskant 23 versehen, so dass durch Anziehen dieser Spannschraube 11 die Ringnut 14 auf das freie Ende des Druckarmes 10 drückt, wodurch der Kniehebel 5 um das Kipplager 20 geschwenkt wird, so dass der Kopf 4, der von der Weichmaterialschicht 2 umgeben ist, einen Druck in der Befestigungsbohrung 3 der Schneidplatte 1 in Richtung auf die Spannschraube 11 ausübt.

In der Figur 2 ist in der Befestigungsbohrung 3 der Schneidplatte 1 die Weichmaterialschicht 2 des Kopfes 4 im Schnitt dargestellt. Die Weichmaterialschicht 2 besteht aus einer aufgelöteten Zinnschicht, so dass der Kopf 4 bei Beaufschlagung des Druckarmes 10 die Weichmaterialschicht verformen kann. Durch die Verformung der Weichmaterialschicht 2 in der Befestigungsbohrung 3 der Schneidplatte 1 ergibt sich eine Vergrösserung der Druckfläche.

Die Ausnehmung 8 des Klemmhalters 7 weist eine umlaufende Anlage 25 auf, durch die im Auflagebereich der Schneidplatte 1 ein Freiraum 26 gebildet wird. Der Kopf 4 des Spannelementes 15 greift geringfügig unterhalb der unteren Kante der Anlage 25 an, so dass die angreifende Kraft in zwei Komponenten zerlegt und damit die Schneidplatte 1 sowohl an die Anlage 25 als auch auf die Stützplatte 9 gepresst wird.

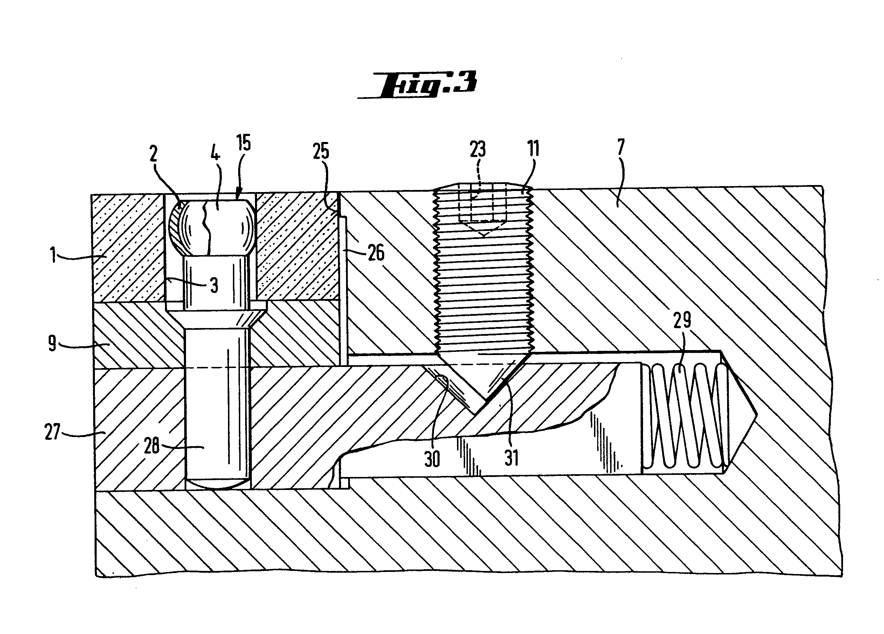

In Figur 3 ist eine Version des Spannelementes 15 dargestellt, das in diesem Fall als Schieber 27 ausgeführt ist. In den Schieber 27 ist der Kugelbolzen 28 eingepresst, der gleichzeitig die Stützplatte 9 auf dem Schieber 27 befestigt. Eine Druckfeder 29 drückt den Schieber 27 nach aussen, so dass die Schneidplatte 1 über den Kopf 4 des Kugelbolzen 28 gestülpt werden kann. Das Spannen erfolgt durch Anziehen der Spannschraube 11, die in ihrem unteren Bereich mit einem Kegel 31 versehen ist, der in die Kegelaussenkung 30 im Schieber 27 eingreift.

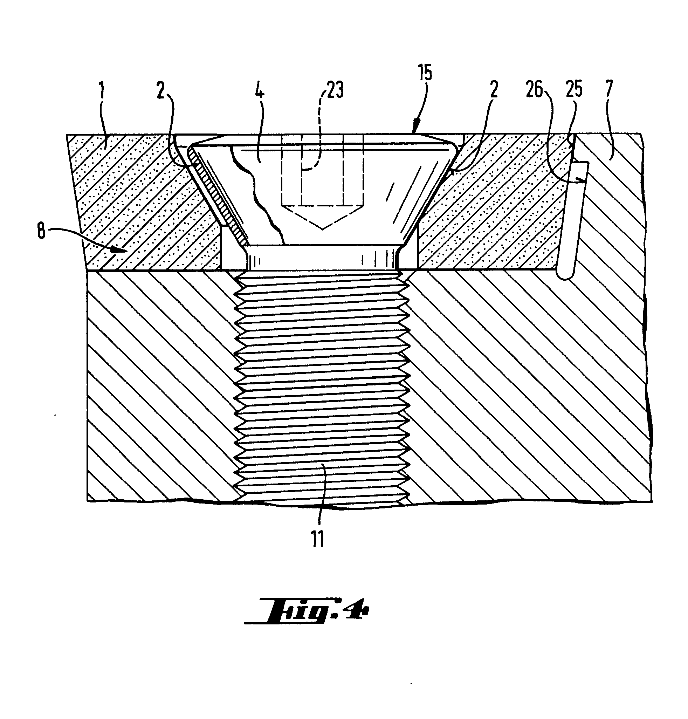

Die Figur 4 zeigt ein Spannelement 15, bei dem die Spannschraube 11 mit einem kegelstumpfförmigen Kopf 4 versehen ist. Die Manterlfläche dieses kegelstumpfförmigen Kopfes 4 trägt dabei die Weichmaterialschicht 2, eine durch Flammspritzen aufgebrachte Kupferschicht, die beim Anziehen der Spannschraube 11 sich verformt und damit der konisch ausgeführten Befestigungsbohrung 3 in der Schneidplatte 1 anpasst. Auch diese Verformung der Weichmaterialschicht 2 führt zu einer Flächenvergrösserung und damit zu einer Verringerung der spezifischen Pressung zwischen dem Kopf 4 der Spannschraube 11 und der Befestigungsbohrung 3 der Schneidplatte 1.

**Patentansprüche**

1. Klemmhalter (7) mit eingesetzter Schneidplatte (1) aus einem spröden, gesinterten Hartstoff, die eine Befestigungsbohrung (3) aufweist, wobei der Klemmhalter mit einer Ausnehmung (8) zur Aufnahme der Schneidplatte und gegebenenfalls einer Stützplatte (9) versehen ist, wobei ein die Stützplatte durchgreifendes Spannelement (15) mit seinem Kopf (4) in die Befestigungsbohrung eingreift, dadurch gekennzeichnet, dass der Kopf (4) des Spannelementes (15) mit einem verformbaren Material beschichtet ist.

2. Klemmhalter nach Anspruch 1, dadurch gekennzeichnet, dass die Dicke der Materialschicht (2) 0,2 bis 1,0 mm beträgt.

3. Klemmhalter nach Anspruch 1 oder 2, dadurch gekennzeichnet, dass die Materialschicht (2) durch Auflöten aufgebracht ist.

4. Klemmhalter nach einem der Ansprüche 1 oder 2, dadurch gekennzeichnet, dass die Materialschicht (2) durch Flammspritzen aufgebracht ist.

5. Klemmhalter nach einem der Ansprüche 1 bis 4, dadurch gekennzeichnet, dass als verformbares Material weiche Metalle aufgebracht sind.

6. Klemmhalter nach einem der Ansprüche 1 bis 5, dadurch gekennzeichnet, dass der Kopf (4) des Spannelementes zylindrisch ist.

7. Klemmhalter nach einem der Ansprüche 1 bis 5, dadurch gekennzeichnet, dass der Kopf (4) des Spannelementes kugelförmig ausgeführt ist.

## Claims

1. Clamp holder (7) having an inserted cutting plate (1) made of a brittle sintered mechanically resistant material which has a fastening hole (3), the clamp holder being provided with a recess (8) for accomodating the cutting plate and optionally a support plate (9), the head (4) of a clamping element (15) that passes through the support plate engaging the fastening hole, characterised in that the head (4) of the clamping element (15) is coated with a deformable material.

2. Clamp holder according to claim 1, characterised in that the thickness of the material layer (2) is from 0.2 to 1.0 mm.

3. Clamp holder according to claim 1 or 2, characterised in that the material layer (2) is applied by soldering.

4. Clamp holder according to claim 1 or claim 2, characterised in that the material layer (2) is applied by flame spraying.

5. Clamp holder according to any one of claims 1 to 4, characterised in that soft metals are applied as the deformable material.

6. Clamp holder according to any one of claims 1 to 5, characterised in that the head (4) of the clamping element is cylindrical.

7. Clamp holder according to any one of claims 1 to 5, characterised in that the head (4) of the clamping element is of spherical design.

## Revendications

1. Porte-plaquette (7) comprenant une plaquette de coupe (1) rapportée qui est réalisée en un matériau fragile fritté à résistance mécanique élevée et comporte un perçage de fixation (3), le porte-plaquette étant muni d'un évidement (8) destiné à recevoir la plaquette de coupe et éventuellement une plaquette support (9), et un élément de blocage (15), traversant la plaquette support, s'engageant par sa tête (4) dans le perçage de fixation, caractérisé par le fait que la tête (4) de l'élément de blocage (15) est revêtue d'un matériau déformable.

2. Porte-plaquette selon la revendication 1, caractérisé par le fait que l'épaisseur de la couche de matériau (2) est de 0,2 à 1,0 mm.

3. Porte-plaquette selon la revendication 1 ou 2, caractérisé par le fait que la couche de matériau (2) est appliquée par brasage.

4. Porte-plaquette selon l'une des revendications 1 ou 2, caractérisé par le fait que la couche de matériau (2) est appliquée par injection à la flamme.

5. Porte-plaquette selon l'une des revendications 1 à 4, caractérisé par le fait que comme matériau deformable on applique des métaux mous.

6. Porte-plaquette selon l'une des revendications 1 à 5, caractérisé par le fait que la tête (4) de l'élément de blocage est cylindrique.

7. Porte-plaquette selon l'une des revendications 1 à 5, caractérisé par le fait que la tête (4) de l'élément de blocage est réalisée sphérique.

0 161 506

Fig.1

**Fig.2**

0 161 506

# Fig.3

0 161 506

_Fig. 4_